# EUROPEAN PATENT APPLICATION

(11) **EP 4 651 455 A1**
(43) Date of publication of application: **19.11.2025**
(21) Application number: 25176418.9
(22) Date of filing: 14.05.2025
(51) Int. Cl.: H04L 41/0631, H04W 24/04, H04L 41/0654, H04L 41/08

(54) **DYNAMIC SPECTRUM CAPTURE**

(30) Priority: 14.05.2024 US 202463647399 P; 12.05.2025 US 202519205531
(71) Applicant: Juniper Networks, Inc., Sunnyvale, CA 94089-1206 (US)
(72) Inventor: KIRAN, Raj, Sunnyvale, 94089 (US); SHINDE, Amit, Sunnyvale, 94089 (US); WANG, Wenfeng, Sunnyvale, 94089 (US); THOMAS, Jacob, Sunnyvale, 94089 (US); HUNG, Posen, Sunnyvale, 94089 (US)
(74) Representative: D Young & Co LLP

(57) **Abstract**

Techniques are described for dynamically invoking a radio frequency (RF) spectrum capture at a site based on detection of an anomalous event at a node or radio of an access point (AP) device at the site. For example, a system is configured to detect an anomalous event at a node of an AP device based on network data obtained for the AP device; based on the anomalous event, invoke an RF spectrum capture by one or more nodes of one or more AP devices at the site; store spectrum data obtained from the RF spectrum capture in association with the anomalous event; and determine a root cause of the anomalous event based on the spectrum data associated with the anomalous event and the network data from which the anomalous event was detected.

## Description

This application claims the benefit of U.S. Patent Application No. 19/205,531, filed May 12, 2025, which claims the benefit of U.S. Provisional Patent Application No. 63/647,399, filed May 14, 2024, the entire contents of which are incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless APs when the device is in range of a compatible wireless AP in order to access a wired network.

The IEEE 802.11 standard defines operation for wireless networks in the 2.4 GHz, 5 GHz, and 6 GHz frequency ranges (also referred to as frequency bands). In general, the Wi-Fi spectrum is divided into channels of 20 MHz. In some scenarios, channels may be aggregated into wider channels to increase data transfer speeds. The 2.4 GHz frequency range supports up to three 20 MHz channels and a single channel having a bandwidth of 40 MHz. The 5 GHz frequency range supports channel widths of 20 MHz, 40 MHz, or 80 MHz. The 6 GHz frequency range supports channel widths of 20 MHz, 40 MHz, 80 MHz, or 160 MHz.

### SUMMARY

Particular aspects are set out in the appended independent claims. Various optional embodiments are set out in the dependent claims,.

In general, this disclosure describes techniques for dynamically invoking a radio frequency (RF) spectrum capture at a site based on detection of an anomalous event at a node or radio of an access point (AP) device at the site. For a new WiFi deployment at a site, deployment engineers may manually evaluate the deployment environment using site survey tools to aid in deciding the types of access points, number of devices, operating channel/bands, power distribution, and the like for the new deployment. Over time, however, the environment, including devices operating in or near the site, can change. With existing tools, it is difficult to track and troubleshoot resulting issues that impact end user experience in a wide WiFi deployment. The disclosed techniques enable dynamic capture of spectrum data at the site based on an anomalous event trigger without human intervention, and storage of the capture for future troubleshooting and root cause analysis of the anomalous event.

According to the disclosed techniques, a computing system may detect an anomalous event at a node or radio of an AP device included in a plurality of AP devices at a site based on network data obtained for the AP device. The computing system invokes the RF spectrum capture based on the detection of the anomalous event. The computing system may send a message to one or more nodes of one or more AP devices included in the plurality of AP devices at the site thereby instructing the one or more nodes to perform the RF spectrum capture on at least a channel of the RF spectrum on which the anomalous event was detected. The computing system stores spectrum data obtained from the RF spectrum capture associated with the anomalous event, e.g., in a database using an identifier assigned to the anomalous event as an index key. The computing system determines a root cause of the anomalous event based on the spectrum data and associated network data of the anomalous event. In some examples, the computing system may comprise a cloud-based network management system (NMS) that manages the plurality of AP devices at the site. In other examples, the computing system may comprise a local controller at the site. In further examples, the computing system may comprise a combination of one or more of the AP devices and one of the network management system or the local controller.

The techniques of this disclosure provide one or more technical advantages and practical applications. Current solutions for tracking and addressing changes to a WiFi deployment at a site may include auto assessment algorithms that are run manually or at regular intervals to help adjust channel and power of access point devices within the site. Moreover, in response to an anomalous event detected at a node or radio of an AP device, a radio resource manager (RRM) at the AP device, in a local controller, or in a cloud-based NMS may trigger a channel or band alteration at the node to avoid the anomalous event on the particular channel or band without understanding what caused the anomalous event or the impact to the end user experience.

The disclosed techniques dynamically generate a real-time trigger based on detection of an anomalous event to instruct a node of an AP device at a site to perform an RF spectrum capture without human intervention. The spectrum data obtained from the RF spectrum capture comprises a snapshot of the RF spectrum at the site at the time (or near the time) the anomalous event was detected. According to the disclosed techniques, the spectrum data is stored in association with the anomalous event to enable retroactive troubleshooting of the anomalous event at a later point in time after the anomalous event has been avoided or remediated. The ability to determine the cause of the anomalous event, and in some cases recommend a remediation action, without human intervention provides an efficient, cost effective, and scalable solution to management of huge numbers of WiFi deployments.

In one example, this disclosure is directed to a system comprising memory and one or more processors in communication with the memory. The one or more processors are configured to detect an anomalous event at a node of an AP device based on network data obtained for the AP device, the AP device included in a plurality of AP devices at a site; based on the anomalous event, invoke an RF spectrum capture by one or more nodes of one or more AP devices included in the plurality of AP devices; store spectrum data obtained from the RF spectrum capture associated with the anomalous event; and determine a root cause of the anomalous event based on the spectrum data and associated network data of the anomalous event.

In another example, this disclosure is directed to a method comprising detecting an anomalous event at a node of an AP device based on network data obtained for the AP device, the AP device included in a plurality of AP devices at a site; based on the anomalous event, invoking an RF spectrum capture by one or more nodes of one or more AP devices included in the plurality of AP devices; storing spectrum data obtained from the RF spectrum capture in association with the anomalous event; and determining a root cause of the anomalous event based on the spectrum data associated with the anomalous event and the network data from which the anomalous event was detected.

In a further example, this disclosure is directed to computer readable media comprising (e.g. storing and/or conveying) instructions that, when executed, cause one or more processors to detect an anomalous event at a node of an AP device based on network data obtained for the AP device, the AP device included in a plurality of AP devices at a site; based on the anomalous event, invoke an RF spectrum capture by one or more nodes of one or more AP devices included in the plurality of AP devices; store spectrum data obtained from the RF spectrum capture in association with the anomalous event; and determine a root cause of the anomalous event based on the spectrum data associated with the anomalous event and the network data from which the anomalous event was detected.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a network management system, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6 is a flow chart illustrating an example operation of the network management system, in accordance with one or more techniques of this disclosure.
FIG. 7 is a flow chart illustrating another example operation of the network management system, in accordance with one or more techniques of this disclosure.

### DETAILED DESCRIPTION

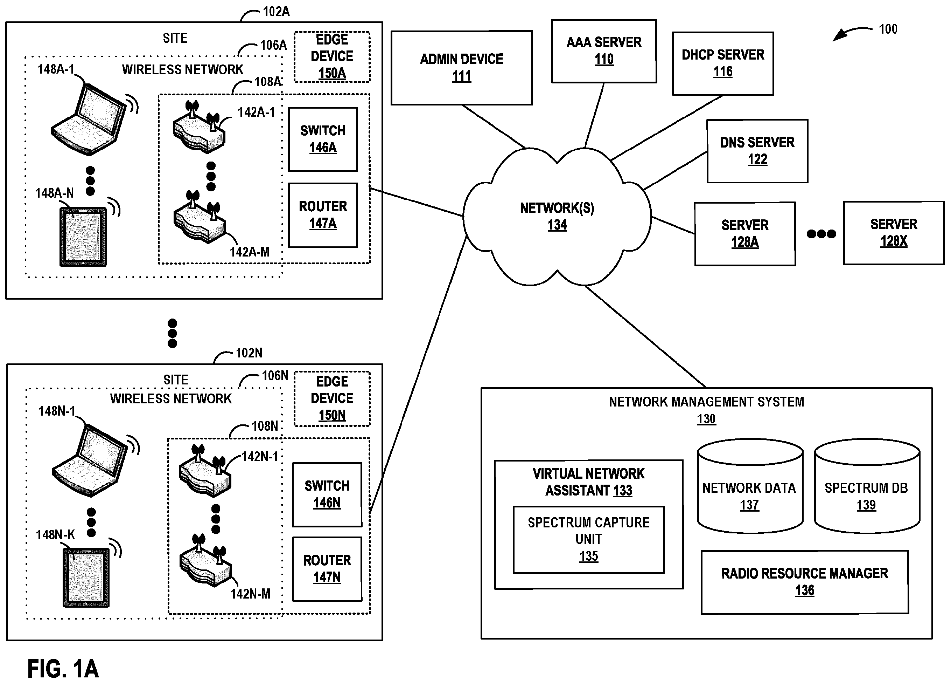

FIG. 1A is a block diagram of an example network system 100 including network management system (NMS) 130, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices 108A-108N, such as access points (APs) 142, switches 146, or routers 147. NAS devices 108 may include any network infrastructure devices capable of authenticating and authorizing client devices to access an enterprise network. For example, site 102A includes a plurality of APs 142A-1 through 142A-M. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site.

To provide wireless networks 106, APs 142 are configured for wireless communication in one or more wireless frequency bands. For example, the wireless frequency bands may include, but are not limited to, a 2.4 GHz frequency band, a 5 GHz frequency band, a 6 GHz frequency band, and/or any other lower or higher frequency bands. Each frequency band is comprised of a plurality of channels. At any given time, each of APs 142 is assigned to operate (e.g., transmit and receive wireless signals) on a specific one of the plurality of channels. The channel assignments may be carried out by, for example, radio resource manager (RRM) 136 of NMS 130 or another RRM or similar module of one or more of NAS devices 108 or another computing device configured to manage radio resources in a wireless network.

Each site 102A-102N also includes a plurality of client devices, otherwise known as user equipment devices (UEs), referred to generally as UEs or client devices 148, representing various wireless-enabled devices within each site. For example, a plurality of UEs 148A-1 through 148A-N are currently located at site 102A. Similarly, a plurality of UEs 148N-1 through 148N-K are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which one or more of APs 142A-1 through 142A-M at site 102A may be connected, and switch 146A may, in turn, be connected to a router 147A. Similarly, site 102N includes a switch 146N to which one or more of APs 142N-1 through 142N-M at site 102N may be connected, and switch 146N may, in turn, be connected to a router 147N. Although illustrated in FIG. 1A as if each site 102 includes a single switch 146 and a single router 147, in other examples, each site 102 may include more or fewer switches and/or routers. In addition, the APs and the other wired client-side devices of the given site may be connected to two or more switches and/or routers. In some examples, interconnected switches and routers comprise wired local area networks (LANs) at sites 102 hosting wireless networks 106. In addition, two or more switches at a site may be connected to each other and/or connected to two or more routers, and two or more routers may be connected to each other and/or connected to other routers at other sites, e.g., via a mesh or partial mesh topology in a hub-and-spoke architecture, forming at least part of a wide area network (WAN).

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and NMS 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure.

NMS 130 monitors network data associated with wireless networks 106A-106N at each site 102A-102N, respectively, to deliver a high-quality wireless network experience to end users, IoT devices and clients at the site. The network data may include a plurality of states or parameters indicative of one or more aspects of wireless network performance. The data may be obtained, collected, and/or received from numerous sources, including client devices, AP devices, switches, routers, gateways, firewalls, etc. The network data may be stored in a database, such as network data 137 within NMS 130 or, alternatively, in an external database. In general, NMS 130 may provide a cloud-based platform for network data acquisition, monitoring, activity logging, reporting, predictive analytics, network anomaly identification, and alert generation. In some examples, NMS 130 uses a combination of artificial intelligence, machine learning, and data science techniques to optimize user experiences and simplify operations across any one or more of wireless access, wired access, and software defined wide area network (SD-WAN) domains.

NMS 130 observes, collects and/or receives network data 137, which may take the form of data extracted from messages, counters and statistics, for example. The network data may be collected and/or measured by one or more UEs 148 and/or one or more NAS devices 108 in wireless networks 106 at sites 102. Some of the network data 137 may be collected and/or measured by other devices in the network system 100, such as switches 146, routers 147, or firewalls. In the example of FIG. 1A, NMS 130 may also obtain, collect, and/or receive spectrum data of wireless networks 106 obtained from an RF spectrum capture performed by one or more nodes of one of more AP devices 142. The spectrum data may be stored in a database, such as spectrum database (DB) 139 within NMS 130 or, alternatively, in an external database.

In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices 108, e.g., APs 142, switches 146, or routers 147, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices 108 while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, routers 147, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, switches 146, and routers 147 may be considered "third-party" network devices when owned by and/or associated with a different entity than NMS 130 such that NMS 130 does not obtain, receive, collect, or otherwise have access to the recorded status and other data of the third-party network devices. In some examples, edge devices 150 may provide a proxy through which the recorded status and other data of the third-party network devices may be reported to NMS 130.

NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with NAS devices 108 and/or other computing devices within network 134. For example, VNA 133 of NMS 130 may include an underlying analytics and network anomaly detection engine and alerting system in accordance with various examples described herein. The underlying analytics engine of VNA 133 may apply historical data and models to the inbound event streams to compute assertions, such as detected anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving underlying network performance metrics and automatically improving the end user experience.

In accordance with one specific implementation, NMS 130 includes at least one computing device or processor. In accordance with other implementations, NMS 130 may comprise one or more computing devices, processors, dedicated servers, virtual machines, containers, services or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

As WiFi gets deployed widely, AP devices are being deployed among a variety of computing devices that operate in wide range of frequencies. As such, any new WiFi deployment needs to be carefully evaluated. For example, for a new WiFi deployment at a site, e.g., deployment of a new wireless network 106 at one of sites 102, deployment engineers may manually evaluate the deployment environment using site survey tools to aid in deciding the types of access points, number of devices, operating channel/bands, power distribution, and the like for the new deployment. Over time, however, the environment, including devices operating in or near the site, can change dynamically.

Current solutions for tracking and addressing changes to a WiFi deployment at a site may include auto assessment algorithms that are run manually or at regular intervals to help adjust channel and power of AP devices within the site. Moreover, in response to an anomalous event detected at a node or radio of an AP device, a radio resource manager at the AP device, in a local controller, or in a cloud-based NMS may trigger a channel or band alteration at the node to avoid the anomalous event on the particular channel or band without understanding what caused the anomalous event or the impact to the end user experience. As such, with existing tools, it is difficult to track environmental changes and troubleshoot resulting issues that impact end user experience in a wide WiFi deployment. For example, troubleshooting may require a service engineer to make trips to WiFi deployment sites to reassess the issues and help aid engineers in debugging the issues. Service engineers may need to carry a wide range of devices to help them run various diagnostic tests, which may involve redoing an RF survey of the problem area. In addition, the issues to troubleshoot may occur only sporadically and at odd times, making the debug activities difficult. Moreover, the tests are time consuming, inefficient, and not cost effective, and do not scale in huge numbers of deployments and at busy operating times of the year.

In accordance with one or more techniques of this disclosure, VNA 133 of NMS 130 includes a spectrum capture unit 135 configured to dynamically invoke a radio frequency (RF) spectrum capture at a site, e.g., site 102A, without human intervention based on detection of an anomalous event at a node or radio of an AP device, e.g., AP device 142A-1, at site 102A. Spectrum capture unit 135 stores spectrum data obtained from the RF spectrum capture in association with the anomalous event, e.g., in spectrum DB 139, for future troubleshooting and root cause analysis of the anomalous event.

According to the disclosed techniques, spectrum capture unit 135 of VNA 133 may detect the anomalous event at the node or radio of AP device 142A-1 included in a plurality of AP devices 142A at site 102A based on network data 137 obtained for AP device 142A-1. Spectrum capture unit 135 invokes the RF spectrum capture based on the detection of the anomalous event. Spectrum capture unit 135 may send a message to one or more nodes of one or more AP devices 142A at site 102A thereby instructing the one or more nodes to perform the RF spectrum capture on at least a channel of the RF spectrum on which the anomalous event was detected. For example, an anomalous event may occur while AP device 142A-1 of site 102A is operating over channel 1 of the 2.4 GHz band. In one example, spectrum capture unit 135 may send a message to one or more nodes of one or more AP devices 142A of site 102A, directing the nodes to perform an RF spectrum capture across channel 1 of the 2.4 GHz band. In other examples, the message may direct the nodes to perform an RF spectrum capture across multiple channels (e.g., channels 1-11) of the band.

Spectrum capture unit 135 stores the spectrum data obtained from the RF spectrum capture in association with the anomalous event, e.g., in spectrum DB 139. In one example, spectrum capture unit 135 may store the spectrum data using an identifier assigned to the anomalous event as an index key in spectrum DB 139. In this way, the stored spectrum data in spectrum DB 139 comprises a snapshot of the RF spectrum at site 102A at the time the anomalous event was detected.

In some cases, based on the anomalous event and after the RF spectrum capture, RRM 136 of NMS 130 may change at least one of a width of an operating channel of the node of AP device 142A-1, the operating channel of the node of AP device 142A-1, or a frequency band of the node of AP device 142A-1 to avoid or remediate the anomalous event and any impact on the wireless network performance and/or end user experience. For example, RRM 136 of NMS 130 may change the frequency band of the node of AP device 142A-1 from 2.4 GHz to 5 GHz. VNA 133 then determines a root cause of the anomalous event based on the spectrum data associated with the anomalous event and the network data from which the anomalous event was detected. For example, VNA 133 may correlate the spectrum data at the time the anomalous event was detected with the network data indicative of the anomalous event to determine whether the anomalous event was caused by an issue in the WiFi network, the wired network, or the WAN. In this way, the disclosed techniques enable VNA 133 to retroactively troubleshoot the anomalous event at a later point in time after the anomalous event has been avoided or remediated.

In some cases, NMS 130 may determine that one or more simulations are needed in order to generate additional data (e.g., to determine a root cause of the anomalous event). NMS 130 may select at least one node of at least one AP device (e.g., AP device 142A-1) to operate as a simulator node. NMS 130 may further select at least one node of at least one AP device (e.g., AP device 142A-2) to operate as a monitoring node. The simulator node(s) may be configured to send synthetic access requests of a simulated client device to at least one node of at least one AP device (e.g., AP device 142A-3). The monitoring node may be configured to continuously monitor the at least one node (e.g., of AP device 142A-3).

The techniques of this disclosure provide one or more technical advantages and practical applications. The disclosed techniques dynamically generate a real-time trigger based on detection of an anomalous event to instruct a node of an AP device at a site to perform an RF spectrum capture without human intervention. The spectrum data obtained from the RF spectrum capture comprises a snapshot of the RF spectrum at the site at the time (or near the time) the anomalous event was detected. According to the disclosed techniques, the spectrum data is stored in association with the anomalous event to enable retroactive troubleshooting of the anomalous event at a later point in time after the anomalous event has been avoided or remediated. The ability to determine the cause of the anomalous event, and in some cases recommend a remediation action, without human intervention provides an efficient, cost effective, and scalable solution to management of huge numbers of WiFi deployments.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a local controller at a site, one or more of the AP devices or NAS devices at a site, a dedicated server, or any other server in addition to or other than NMS 130, or may be distributed throughout network 100, and may or may not form a part of NMS 130.

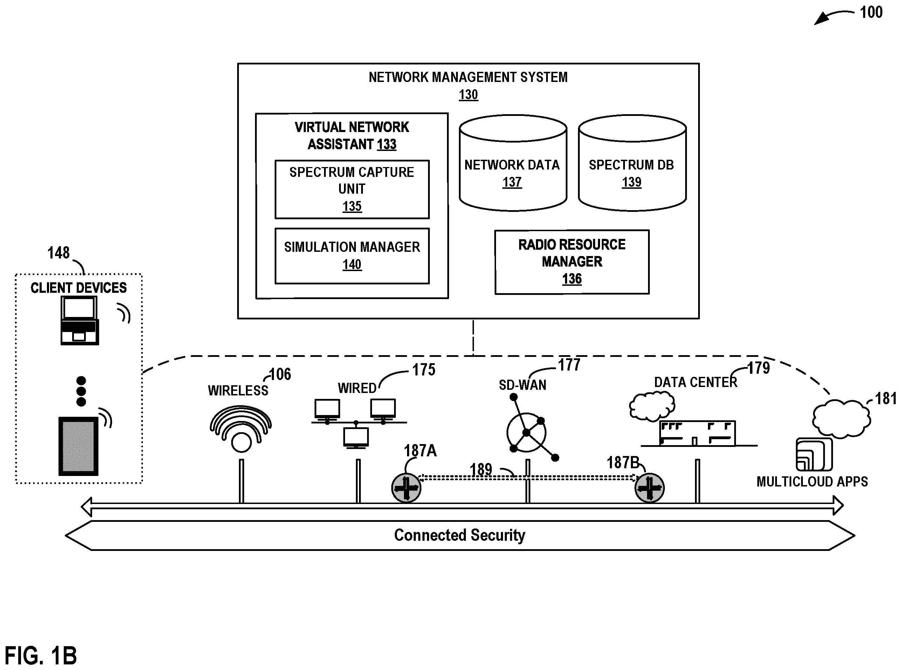

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., user devices 148 connected to wireless network 106 and wired LAN 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven RF optimization with reinforcement learning.

As illustrated in the example of FIG. 1B, AI-driven NMS 130 also provides configuration management, monitoring and automated oversight of software defined wide area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of wired networks 175 hosting wireless networks 106, such as branch or campus networks, to "hub" routers 187B further up the cloud stack toward cloud-based application services 181. SD-WAN 177 often operates and manages an overlay network on an underlying physical wide area network (WAN), which provides connectivity to geographically separate customer networks. In other words, SD-WAN 177 extends software defined networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. Thus, by only requiring a user/system to specify declarative requirements that specify a desired result applicable across various different types of devices, management and configuration of the network devices becomes more efficient.

In accordance with the techniques described in this disclosure, VNA 133 of NMS 130 includes spectrum capture unit 135 configured to detect an anomalous event at a node or radio of an AP device of wireless network 106 based on network data 137 obtained for the AP device, and based on the detected anomalous event, dynamically invoke an RF spectrum capture by one or more nodes of one or more AP devices at a site of wireless network 106 without human intervention. Spectrum capture unit 135 stores spectrum data obtained from the RF spectrum capture in association with the anomalous event, e.g., in spectrum DB 139, for future troubleshooting and root cause analysis of the anomalous event. VNA 133 determines a root cause of the anomalous event based on the spectrum data associated with the anomalous event and the network data from which the anomalous event was detected.

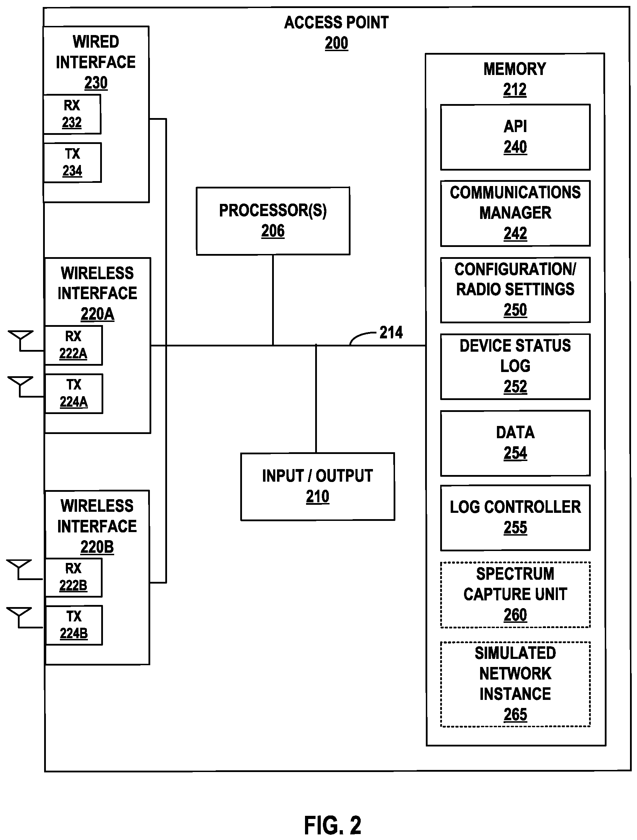

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a WiFi 802.11 interface (e.g., 2.4 GHz, 5 GHz and/or 6 GHz) and second wireless interface 220B may include a Bluetooth interface and/or a Bluetooth Low Energy (BLE) interface. In other examples, first wireless interface 220A may include a WiFi radio dedicated to servicing client devices, such as UEs 148 of FIG. 1A and second wireless interface 220B may include a dedicated scan radio capable of performing channel, band, or full spectrum scanning periodically, continuously, or on-demand. In still other examples, one or both of first wireless interface 220A and second wireless interface 220B may include a hybrid radio capable of both servicing clients and performing spectrum scanning. In other scenarios, access point 200 may include three wireless interfaces, e.g., one WiFi radio, one Bluetooth or BLE radio, and one dedicated scan radio.

Processor(s) 206 are programmable hardware-based processors configured to execute software instructions, such as those used to define a software or computer program. Such software instructions may be provided to the processor from or by a computer-readable medium. A computer readable medium may be implemented as a computer-readable storage medium (such as memory 212), such as non-transitory computer-readable mediums including a storage device (e.g., a disk drive, or an optical drive) or a memory (such as Flash memory or RAM) or any other type of volatile or non-volatile memory, that stores instructions to cause the one or more processors 206 to perform the techniques described herein. A computer readable medium may also or alternatively be implemented as a computer-readable transmission medium by which instructions to cause the one or more processors 206 to perform the techniques described herein may be conveyed (such as over bus 214, wired interface 230 and/or wireless interface 220). A computer-readable transmission medium may include carrier waves, transmission signals or the like. A computer-readable transmission medium may convey instructions between components of a single computer system and/or between plural separate computer systems.

Memory 212 includes one or more devices configured to store programming modules and/or data associated with operation of access point 200. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more performance metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220B. Configuration settings 250 include any device settings for access point 200 such as radio settings for each of wireless interface(s) 220A-220B. These settings may be configured manually or may be remotely monitored and managed by NMS 130 to optimize wireless network performance on a scheduled, periodic (e.g., hourly, daily, weekly, monthly), based on a system trigger, or ad-hoc basis. For example, access point 200 may receive a configuration command including an indication of values of one or more wireless radio configuration settings from NMS 130 (e.g., from RRM 136) via wired interface 230 and/or API 240.

Processors 206 may execute the configuration command to activate or select values of one or more settings in configuration/radio settings 250 for each of wireless interfaces 220A-220B, as indicated by the configuration command. In some examples, configuration/radio settings 250 may include frequency band, channel, and/or channel bandwidth settings of the wireless radios (i.e., wireless interfaces 220A-220B) within access point 200 that are configured by RRM 136 of NMS 130 of FIGS. 1A & 1B. As another example, access point 200 may receive a configuration command including an indication of a mode to operate in, as further described below. Processors 206 may execute the configuration command to execute simulated network instance 265 that simulates a network instance. In some examples, the configuration command may include configuration information for configuring simulated network instance 265, such as a schedule at which to execute simulated network instance 265.

As described herein, access point 200 may measure and report network data from status log 252 to NMS 130. The network data may comprise event data, telemetry data, and/or other performance-related data. The network data may include various parameters indicative of the performance and/or status of the wireless network. The parameters may be measured and/or determined by one or more of the UE devices and/or by one or more of the APs in a wireless network. NMS 130 may determine one or more service level experience (SLE) metrics based on the SLE-related data received from the APs in the wireless network and store the SLE metrics as network data 137 (FIG. 1A).

In accordance with one or more techniques of this disclosure, NMS 130 may detect an anomalous event at one of wireless interfaces 220 of access point 200 based on network data 137 obtained for access point 200 from data storage 254 and/or data status log 252, and based on the detected anomalous event, dynamically invoke an RF spectrum capture by one or more wireless interfaces 220 of at least access point 200 without human intervention. In other examples, access point 200 may itself include a spectrum capture unit 260 configured to operate substantially similar to the cloud-based spectrum capture unit 135 of FIGS. 1A & 1B. For example, spectrum capture unit 260 of access point 200 may be configured to detect an anomalous event at one of wireless interfaces 220 of access point 200 based on network data in data storage 254 and/or data status log 252, which may be monitored by or reported to NMS 130. Based on the detected anomalous event, spectrum capture unit 260 may dynamically invoke an RF spectrum capture by one or more wireless interfaces 220 of at least access point 200 without human intervention.

One or more of wireless interfaces 220A and 220B of access point 200 are capable of performing an RF spectrum capture of a particular channel, band, or the full spectrum in response to a message instructing the wireless interface to perform the RF spectrum capture. In some examples, the message may be received via wired interface 230 or API 240 from NMS 130 of FIGS. 1A & 1B. In other examples, the message may be received locally from spectrum capture unit 260 of access point 200. Upon completion of the RF spectrum capture, the spectrum data may be stored locally in data storage 254 of access point 200 or transmitted to NMS 130 for storage in the cloud, e.g., in spectrum DB 139, for future troubleshooting and root cause analysis of the anomalous event. AP 200 or NMS 130 may determine a root cause of the anomalous event based on the spectrum data associated with the anomalous event and the network data from which the anomalous event was detected.

In some examples, access point 200 may be configured to operate as a simulator node that may simulate a client device. Processors 206 of access point 200 may execute simulated network instance 265 that simulates a network instance, e.g., a client device, for purposes of generating additional data for an RF spectrum capture. Access point 200 may operate as simulated network instance 265 that allows the access point to operate as a client device. While operating as simulated network instance 265, access point 200 may be configured to request network access to one or more separate APs operating as monitor nodes for continuous monitoring of the RF spectrum. Access point 200 may simulate network connections or associations and, thus, generate synthetic activity (e.g., synthetic access request and access response messages) on the operational channels of the APs. For example, access point 200 may send synthetic access requests to another AP on a first channel of the 2.4 GHz band on which the another AP is operating and provoke a response (e.g., an access response rejecting the synthetic access request) in order to ensure that some network activity is present on the first channel of the 2.4 GHz band in order to monitor the channel for RF spectrum issues.

In some examples, when another AP is instructed by NMS 130 to operate as a simulator node, access point 200 may receive a message from NMS 130 instructing access point 200 to operate as a monitor node. That is, access point 200 may conduct an RF spectrum scan in synchronization with the simulation node to collect spectrum data for the synthetic activity on the operational channels of access point 200. The spectrum data may be transmitted to NMS 130 for storage in the cloud, e.g., in spectrum DB 139.

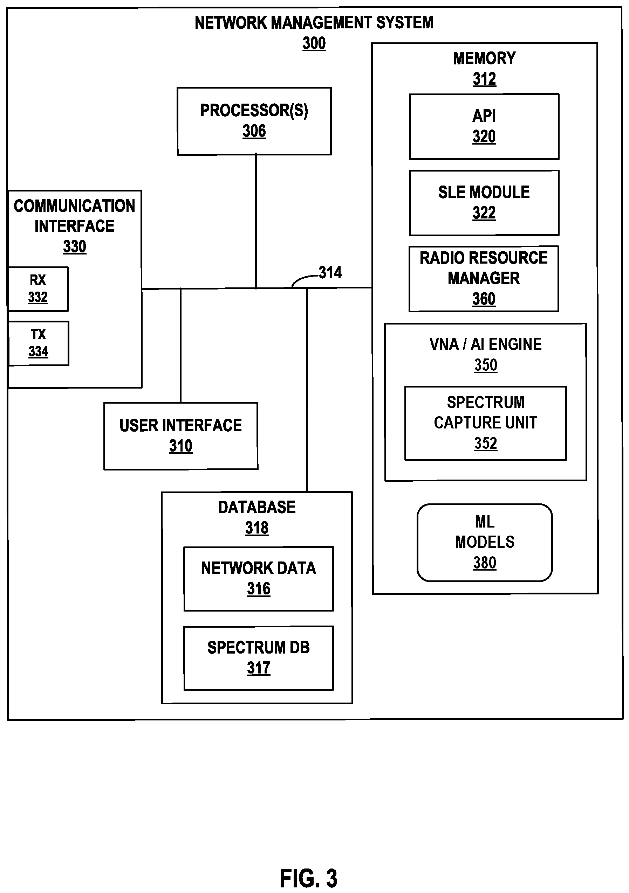

FIG. 3 is a block diagram of an example network management system (NMS) 300, in accordance with one or more techniques of the disclosure. NMS 300 may be used to implement, for example, NMS 130 in FIGS. 1A & 1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146, routers 147, and other network nodes within network 134, e.g., gateway routers 187 of FIG. 1B, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program. Such software instructions may be provided to the processor from or by a computer-readable medium. A computer readable medium may be implemented as a computer-readable storage medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. A computer readable medium may also or alternatively be implemented as a computer-readable transmission medium by which instructions to cause the one or more processors 306 to perform the techniques described herein may be conveyed (such as over bus 314 and/or communication interface 330). A computer-readable transmission medium may include carrier waves, transmission signals or the like. A computer-readable transmission medium may convey instructions between components of a single computer system and/or between plural separate computer systems.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, router 147, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, performance-related data, or event data received from one or more of client device APs 148, APs 142, switches 146, routers 147, or other network nodes, e.g., gateway routers 187 of FIG. 1B, used by NMS 300 to remotely monitor the performance of wireless networks 106A-106N and application sessions from client device to cloud-based application server. NMS 300 may further transmit data via communications interface 330 to any of network devices such as client devices 148, APs 142, switches 146, routers 147, other network nodes within network 134, admin device 111 to remotely manage wireless networks 106A-106N and portions of the wired network.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource management (RRM) engine 360. In accordance with the disclosed techniques, VNA/AI engine 350 includes spectrum capture unit 352 configured to detect an anomalous event at a node or radio of an AP device at a site, e.g., AP device 142A-1 at site 102A, based on network data 316 obtained for the AP device, and based on the detected anomalous event, dynamically invoke an RF spectrum capture by one or more nodes of one or more AP devices at the site without human intervention. Spectrum capture unit 352 stores spectrum data obtained from the RF spectrum capture in association with the anomalous event, e.g., in spectrum DB 317, for future troubleshooting and root cause analysis of the anomalous event. VNA/AI engine 350 determines a root cause of the anomalous event based on the spectrum data associated with the anomalous event and the network data from which the anomalous event was detected.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1 through 142A-N collect SLE-related data from UEs 148A-1through 148A-N currently connected to wireless network 106A. This data is transmitted to NMS 300, which executes SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across nodes or radios of all APs 142 in each network 106A-106N. For example, RRM engine 360 may monitor events, power, channel, bandwidth, and number of clients connected to each node or radio or each AP device. RRM engine 360 may further automatically change or update configurations of one or more nodes or radios or APs 142 at a site 102 with an aim to improve coverage and capacity metrics and thus to provide an improved wireless experience for the end user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., poor SLE metric(s) indicative of connected issues at one or more network devices or anomalous event(s) detected on one or more channels of the RF spectrum indicative of capacity or communication issues in the wireless network. In addition, VNA/AI engine 350 may automatically invoke one or more corrective actions intended to address the identified root cause(s) of the abnormal states. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing frequency band, channel, and/or channel bandwidth on a node or radio of an AP or a set of APs, and the like. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

In accordance with one or more techniques of this disclosure, spectrum capture unit 352 of VNA 350 is configured to detect an anomalous event at a node or radio of an AP device at a site, e.g., AP device 142A-1 at site 102A, based on network data 316 obtained for the AP device. Spectrum capture unit 352 may detect the anomalous event at the node of the AP device at the time of occurrence of the anomalous event using deep learning, e.g., ML models 380, on network data 316 that is available from the AP devices at the sites of deployment. The detected anomalous event may be: (1) a capacity anomaly event on an operating channel of the node of the AP device due to interference/high usage on the shared channel from a non-WiFi source, (2) a scan anomaly event on at least one channel detected based on a sweep of the RF spectrum by the node of the AP device operating as a scan radio, (3) an increase in communication frame errors for one or more client devices on the operating channel of the node of the AP device, or any other event indicative of an anomalous event and/or issue at the node of the AP device. The communication frame errors may include, e.g., transmitter (tx)-errors: missing acknowledgments (acks), tx retries, timeouts (physical & virtual sensing timeouts due to medium busy, transmit beacon miss, transmit physical medium errors); and/or receiver (rx)-errors: decryption errors, decode errors, corrupted physical layer headers, bad rx frames (runt size, or corrupted fields in packets) for clients on the affected channel.

Based on the detected anomalous event, spectrum capture unit 352 dynamically invokes an RF spectrum capture by one or more nodes of one or more AP devices at the site without human intervention. To invoke the RF spectrum capture, spectrum capture unit 352 may send a message to at least one node of at least one AP device thereby instructing the node to perform the RF spectrum capture on at least one channel of the RF spectrum. In this way, the detected anomalous event automatically triggers performance of the RF spectrum capture. In some examples, in response to detection of the anomalous event at the node of the AP device, spectrum capture unit 352 may instruct a dedicated scan radio of the AP device to perform the RF spectrum capture on at least a channel of the RF spectrum on which the anomalous event was detected. In other examples, in response to detection of the anomalous event at the node of the AP device, spectrum capture unit 352 may initiate selection of one or more nodes to perform the RF spectrum capture and/or selection of one or more channels (or selection of the full spectrum) on which to perform the RF spectrum capture. The RF spectrum captured from the selected nodes on the selected channels may all be correlated with the anomalous event and stored in spectrum DB 317 for later troubleshooting. Performing the RF spectrum capture across multiple nodes and/or multiple channels may allow for determination of an impact or scope of the anomalous event, e.g., across an area of APs or across multiple channels of the frequency spectrum. Spectrum capture unit 352 may carefully select the node or set of nodes to perform the RF spectrum capture so as to not affect any existing connections and to minimize impact of current associations.

Spectrum capture unit 352 stores spectrum data obtained from the RF spectrum capture in association with the anomalous event for future troubleshooting and root cause analysis of the anomalous event. For example, spectrum capture unit 352 correlates the spectrum data obtained from the RF spectrum capture with the anomalous event for storage in an entry of spectrum DB 317 as a snapshot of the network at the time of the anomalous event. The node or a set of nodes may perform the RF spectrum capture on a single channel or a range of channels. Spectrum capture unit 352 may then collate all the relevant spectrum data and record the spectrum data in time order in spectrum DB 317 to get a holistic view of the spectrum of the problem area at the time (or near the time) of the anomalous event.

After the RF spectrum capture, spectrum capture unit 352 may determine to have one or more nodes participate in active monitoring of the area and/or determine a minimum number of nodes required to continue monitoring. While this activity is in progress, spectrum capture unit 352 may determine to select some nodes to simulate connections. For example, a simulation node may operate as a client device requesting network access via the APs to simulate network connections or associations and, thus, generate synthetic activity (e.g., synthetic access request and access response messages) on the operational channels of the nodes selected for continuous monitoring. To check if there are improvements in connections or associations with other devices, self-tests, and record behavior, the monitoring nodes may monitor and record the pattern, timing, and other important information such as deployment area, time, impact area/depth, number of clients, etc. for successive intervals.

In some examples, after capturing and storing the snapshot of the RF spectrum, RRM 360 may avoid or remediate the anomalous event by instructing a change to the frequency band, channel, or channel width at the node at which the anomalous event was detected. For example, as a part of mitigation of the anomalous event, a node's operating band, channel, or channel width could be altered to avoid issues with spectrum interference and help provide alternate operational opportunities and help maintain connections. Such changes are recorded, and necessary notifications are sent in case a manual intervention is needed to help remove, switch off, move, identify interfering devices.

VNA/AI engine 350 determines a root cause of the anomalous event based on the spectrum data associated with the anomalous event and the network data from which the anomalous event was detected. The stored spectrum data may be used at a later time for troubleshooting to determine a root cause of the anomalous event, e.g., after the anomalous event has been resolved, avoided, or remediated. In this way, spectrum capture unit 352 may trigger the RF spectrum capture based on detecting the anomalous event from network data for a single node or group of nodes in order to record timely spectrum data related to occurrence of the anomalous event and preserve the spectrum data for later troubleshooting without any manual intervention.

In some examples, ML models 380 may comprise a supervised ML model that is trained, using training data comprising pre-collected, labeled network data received from network devices (e.g., client devices, APs, switches and/or other network nodes), to detect the AP continuous swapping between SPs. The supervised ML model may comprise one of a logistical regression, naive Bayesian, support vector machine (SVM), or the like. In other examples, ML models 380 may comprise an unsupervised ML model. Although not shown in FIG. 3, in some examples, database 318 may store the training data and VNA/AI engine 350 or a dedicated training module may be configured to train ML model 380 based on the training data to determine appropriate weights across the one or more features of the training data.

Although the techniques of the present disclosure are described in this example as performed by NMS 300, techniques described herein may be performed by any other computing device(s), system(s), and/or server(s), and that the disclosure is not limited in this respect. For example, one or more computing device(s) configured to execute the functionality of the techniques of this disclosure may reside in a local controller at a site, one or more of the AP devices or NAS devices at a site, a dedicated server, or any other server in addition to or other than NMS 300, or may be distributed throughout a network, and may or may not form a part of NMS 300.

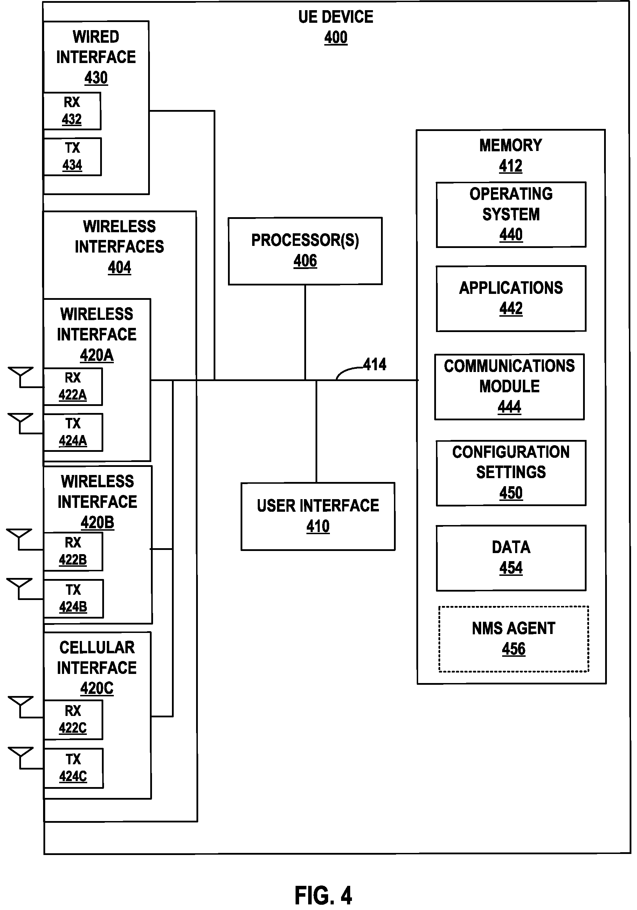

FIG. 4 shows an example user equipment (UE) device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program. Such software instructions may be provided to the processor from or by a computer-readable medium. A computer readable medium may be implemented as a computer-readable storage medium (such as memory 412), such as non-transitory computer-readable mediums including a storage device (e.g., a disk drive, or an optical drive) or a memory (such as Flash memory or RAM) or any other type of volatile or non-volatile memory, that stores instructions to cause the one or more processors 406 to perform the techniques described herein. A computer readable medium may also or alternatively be implemented as a computer-readable transmission medium by which instructions to cause the one or more processors 406 to perform the techniques described herein may be conveyed (such as over bus 414, wired interface 430 and/or wireless interfaces 404, 420). A computer-readable transmission medium may include carrier waves, transmission signals or the like. A computer-readable transmission medium may convey instructions between components of a single computer system and/or between plural separate computer systems.

Memory 412 includes one or more devices configured to store programming modules and/or data associated with operation of UE 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage 454. Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data storage 454 may include, for example, a status/error log including a list of events specific to UE 400. The events may include a log of both normal events and error events according to a logging level based on instructions from NMS 130. Data storage 454 may store any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130.

As described herein, UE 400 may measure and report network data from data storage 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 137 (FIG. 1A) based on the SLE-related data received from the UEs or client devices in the wireless network.

Optionally, UE device 400 may include an NMS agent 456. NMS agent 456 is a software agent of NMS 130 that is installed on UE 400. In some examples, NMS agent 456 can be implemented as a software application running on UE 400. NMS agent 456 collects information including detailed client-device properties from UE 400, including insight into UE 400 roaming behaviors. The information provides insight into client roaming algorithms, because roaming is a client device decision. In some examples, NMS agent 456 may display the client-device properties on UE 400. NMS agent 456 sends the client device properties to NMS 130, via an AP device to which UE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of UE 400 also collects information about which APs the UE 400 connected with, which also indicates which APs the UE 400 did not connect with. NMS agent 456 of UE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of UE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

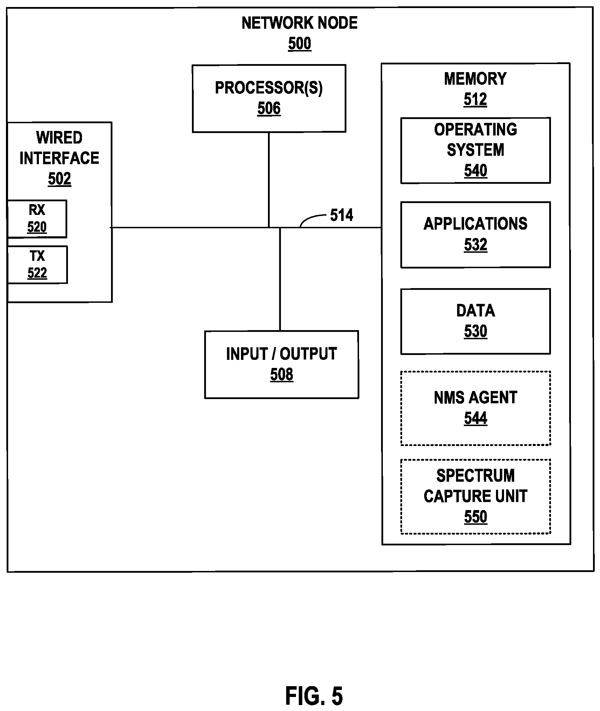

FIG. 5 is a block diagram illustrating an example network node 500, in accordance with one or more techniques of this disclosure. In one or more examples, the network node 500 implements a device or a server attached to the network 134 of FIG.1A, e.g., switches 146, routers 147, AAA server 110, DHCP server 116, DNS server 122, web servers 128, etc., or another network device supporting one or more of wireless network 106, wired LAN 175, or SD-WAN 177, or data center 179 of FIG. 1B, e.g., routers 187.

In this example, network node 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540 and data/information 530. Data 530 may include a system log and/or an error log that stores event data, including behavior data, for network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., registration request, AAA services, DHCP requests, Simple Notification Service (SNS) lookups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or another module running on network node 500.

The data collected and reported by network node 500 may include periodically reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer.

In some examples, network node 500 optionally includes an NMS agent 544. NMS agent 544 may periodically create a package of the statistical data according to a second periodic interval, e.g., every 3 minutes. The collected and sampled data periodically reported in the package of statistical data may be referred to herein as "oc-stats." In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen and/or NMS 130 may observe and record the events at network node 500 as the events happen. The event-driven data may be referred to herein as "oc-events."

In accordance with one or more techniques of this disclosure, network node 500 may include a spectrum capture unit 550 configured to operate substantially similar to the cloud-based spectrum capture unit 135 of FIGS. 1A & 1B. For example, spectrum capture unit 550 of network node 500 may be configured to detect an anomalous event at a node or radio of an AP device of a wireless network based on network data obtained for the AP device, and based on the detected anomalous event, dynamically invoke an RF spectrum capture by one or more nodes of one or more AP devices at a site of the wireless network without human intervention. Spectrum capture unit 550 may store spectrum data obtained from the RF spectrum capture in association with the anomalous event, e.g., locally in data storage 530 and/or in cloud-based spectrum DB 139 of NMS 130, for future troubleshooting and root cause analysis of the anomalous event. Network node 550 or NMS 130 may determine a root cause of the anomalous event based on the spectrum data associated with the anomalous event and the network data from which the anomalous event was detected.

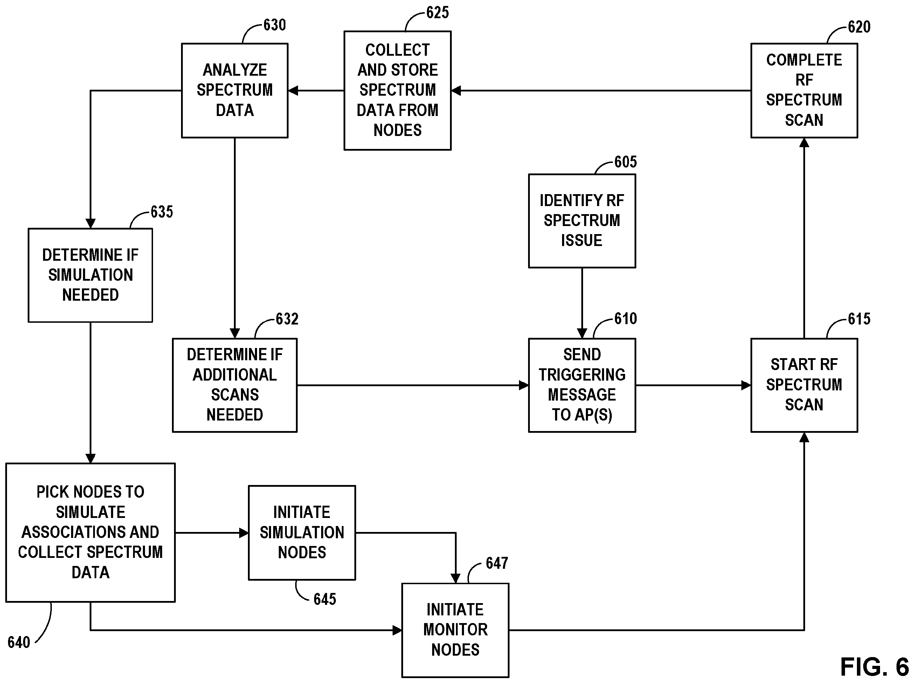

FIG. 6 is a flow chart illustrating an example operation 600 of the network management system, in accordance with one or more techniques of this disclosure. The example operation is generally described above with respect to NMS 300, and specifically spectrum capture unit 352 in VNA/AI engine 350 of NMS 300, from FIG. 3. In other examples, the operation of FIG. 6 may be performed by other network devices, such as NMS 130 from FIGS. 1A & 1B, NAS devices 108 of FIG. 1A, AP device 200 of FIG. 2, and/or network node 500 from FIG. 5. Further, in other examples, operations described in connection with FIG. 6 may be merged, performed in a different sequence, omitted, or may encompass additional operations not specifically illustrated or described.

Spectrum capture unit 352 detects an anomalous event at a node or radio of an AP device (e.g., AP device 142A-1 of FIG. 1A) (605). For example, spectrum capture unit 352 may detect an anomalous event based on an increase in communication frame errors for one or more client devices on the operating channel of the node of the AP device. Based on determining the anomalous event has occurred, spectrum capture unit 352 of NMS 300 sends a message to one or more nodes of one or more AP devices instructing the nodes to perform an RF spectrum capture on a channel and/or frequency band (610). Based on the triggering message from spectrum capture unit 352, the selected nodes conduct an RF spectrum scan of the specified channel, operating channel, and/or frequency band (615). The selected nodes determine whether the spectrum capture has been completed (620).

Spectrum capture unit 352 obtains the RF spectrum capture data from the selected nodes (625). Spectrum capture unit 352 may store the spectrum data obtained from the RF spectrum capture in association with the anomalous event, e.g., in spectrum DB 317. In one example, spectrum capture unit 352 may store the spectrum data using an identifier assigned to the anomalous event as an index key in spectrum DB 317. In this way, the stored spectrum data in spectrum DB 317 comprises a snapshot of the RF spectrum at site 102A at the time the anomalous event was detected.

VNA/AI engine 350 analyzes the spectrum capture data (630). For example, VNA/AI engine 350 may analyze the spectrum capture data to attempt to determine a root cause of the anomalous event, based on the spectrum data associated with the anomalous event (e.g., in combination with additional network data obtained from the one or more nodes). Based on the analysis, VNA/AI engine 350 determines whether additional RF spectrum scans are necessary (e.g., more data is needed for a proper diagnosis and/or solution) (632). If additional scans are needed, spectrum capture unit 352 sends a message to one or more nodes directing the nodes to perform an RF spectrum capture on a channel and/or frequency band (610).

VNA/AI engine 350 also determines whether simulations are needed (635). If simulations are needed, spectrum capture unit 352 determines a set of nodes to operate as simulation nodes and a set of nodes to operate as data collection or monitor nodes (640). Spectrum capture unit 352 may initiate the selected simulation nodes (645). For example, the simulation nodes may operate as client devices requesting network access via the APs to simulate network connections or associations and, thus, generate synthetic activity (e.g., synthetic access request and access response messages) on the operational channels of the APs. Spectrum capture unit 352 may also initiate the selected monitor nodes (647). For example, a first node of a first AP may operate as a monitor node while a second node on a second AP may operate as a simulation node (e.g., a simulated client device). The second node may attempt to connect to the first node. For example, the second node may send synthetic access requests to the first node on a first channel of the 2.4 GHz band on which the first node is operating and provoke a response from the first AP (e.g., an access response rejecting the synthetic access request) in order to ensure that some network activity is present on the first channel of the 2.4 GHz band in order to monitor the channel for RF spectrum issues. The monitor nodes may conduct an RF spectrum scan (615) in synchronization with the simulation nodes to collect spectrum data for the synthetic activity on the operational channels of the APs on which the monitoring nodes are operating. In some examples, the decision to conduct a simulation may be made by the APs themselves rather than NMS 300. Further, in some examples, the selected monitor nodes may be configured to continuously monitor and scan the RF spectrum to identify potential anomalous events or other issues, even after a simulation has concluded.

Spectrum capture unit 352 may collect the simulation data and use the simulation data to further diagnose and/or resolve the issue associated with the AP (e.g., in conjunction with components such as RRM 360). In some examples, the simulation data may be stored in spectrum DB 317 and associated with the anomalous event. In some examples, additional simulations and/or RF scans may be started or scheduled based on analysis of the spectrum data obtained in conjunction with the simulation, as seen by the continuous process from step 615 to step 630.

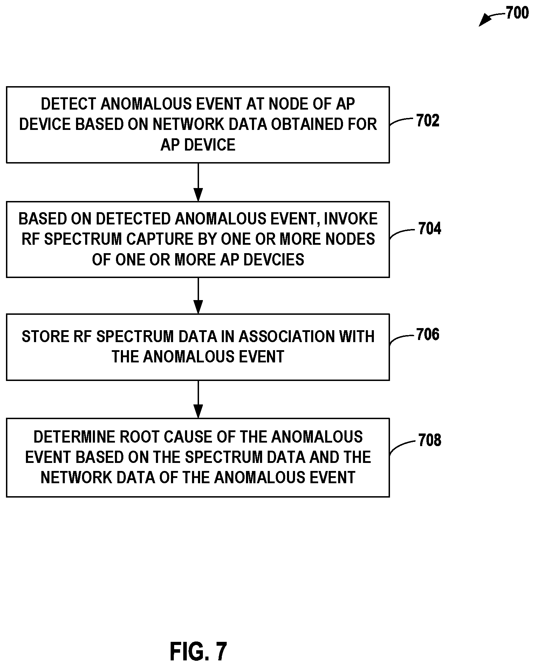

FIG. 7 is a flow chart illustrating another example operation 700 of the network management system, in accordance with one or more techniques of this disclosure. The example operation is described herein with respect to NMS 130 from FIGS. 1A-1B. In other examples, the operation of FIG. 7 may be performed by other network devices, such as NAS devices 108 of FIG. 1A, AP device 200 of FIG. 2, NMS 300 from FIG. 3, and/or network node 500 from FIG. 5.

NMS 130 obtains network data 137 for NAS devices 108, including AP devices 142, switches 146, and routers 147, at a site 102. Spectrum capture unit 135 of NMS 130 detects an anomalous event at a node of an AP device 142A-1 based on the network data obtained for AP device 142A-1 (702). The network data may include event data, such as interference event data and communication event data. To detect the anomalous event, spectrum capture unit 135 of NMS 130 detects, for example, one of: (1) a capacity anomaly event on an operating channel of the node of AP device 142A-1 due to interference from a non-WiFi source, (2) an increase in communication frame errors for one or more client devices 148A on the operating channel of the node of AP device 142A-1, or (3) a scan anomaly event on at least one channel based on a sweep of the RF spectrum by the node of AP device 142A-1 operating as a scan radio.

Based on the anomalous event, spectrum capture unit 135 of NMS 130 invokes an RF spectrum capture by one or more nodes of one or more AP devices 142A at site 120A (704). Spectrum capture unit 135 may select the one or more nodes of the one or more AP devices to perform the spectrum capture, e.g., based on proximity of the other AP devices to AP device 142A-1 at which the anomalous event was detected. In some cases, spectrum capture unit 135 may select the one or more channels or one or more frequency bands of the RF spectrum on which to perform the RF spectrum capture, e.g., based on proximity of the other channels or frequency bands to an operating channel or frequency band of the node of AP device 142A-1 at which the anomalous event was detected. In some scenarios, spectrum capture unit 135 may invoke a full RF spectrum capture by the one or more nodes of the one or more AP devices 142 that includes all frequency bands of the RF spectrum.

In some examples, to invoke the RF spectrum capture, spectrum capture unit 135 sends a message to at least a node of AP device 142A-1 operating as a scan radio thereby instructing the scan radio to perform the RF spectrum capture on at least a channel of the RF spectrum on which the anomalous event was detected. In other examples, to invoke the RF spectrum capture, spectrum capture unit 135 sends a message to at least the node of AP device 142A-1 at which the anomalous event was detected thereby instructing the node to perform the RF spectrum capture on at least an operating channel of the node.

Spectrum capture unit 135 stores spectrum data, obtained from the RF spectrum capture performed by the one or more AP devices 142A, in association with the anomalous event in a database, e.g., spectrum DB 139 (706). The captured spectrum data comprises a snapshot of the RF spectrum at site 102A at the time the anomalous event was detected. To store the spectrum data, spectrum capture unit 135 may assign an identifier to the anomalous event and associate the spectrum data obtained from the RF spectrum capture with the identifier of the anomalous event. Spectrum capture unit 135 may then store the spectrum data in spectrum DB 139 using the identifier of the anomalous event as an index key. In some cases, based on the anomalous event and after the RF spectrum capture, RRM 136 of NMS 130 may change at least one of a width of an operating channel of the node of AP device 142A-1, the operating channel of the node of AP device 142A-1, or a frequency band of the node of AP device 142A-1.

VNA 133 of NMS 130 determines a root cause of the anomalous event based on the spectrum data stored in spectrum DB 139 in association with the anomalous event and the network data 137 from which the anomalous event was detected (708). To determine a root cause of the anomalous event, VNA 133 may retrieve the spectrum data associated with the anomalous event from spectrum DB 139. VNA 133 may then correlate the spectrum data with the network data indicative of the anomalous event and determine the root cause of the anomalous event within site 102A based on the spectrum data correlated with the network data of the anomalous event. The stored spectrum data, as a snapshot of the RF spectrum at the time the anomalous event was detected, enables VNA 133 to retroactively troubleshoot the anomalous event at a later point in time after the anomalous event has been avoided or remediated. In this way, NMS 130 may avoid or quickly resolve any impact on end user experience due to the anomalous event without losing the ability to investigate the cause and/or scope of the anomalous event at site 102A.

In some examples, NMS 130 may send a notification of the determined root cause of the anomalous event to a computing device, e.g., admin device 111, where the notification includes at least one recommendation to avoid or remediate the determined root cause. The recommendation may enable a network administrator of wireless network 106A at site 102A to resolve a current or ongoing anomalous event or to proactively resolve a predicted future anomalous event.

Although the example operation of FIG. 7 is described herein as being performed by the cloud-based NMS 130, in other examples the example operation may be performed by a system comprising one or more other network devices and/or a combination of NMS 130 and one or more other network devices. In one example, the example operation may be performed by a local controller that manages the plurality of AP devices at the site. In another example, the example operation may be performed by at least one AP device of the plurality of AP devices 142A at site 102A. In a further example, the example operation may be performed by at least one network devices of a plurality of network devices 146A, 147A at site 102A that are connected to the plurality of AP devices 142A. In still other examples, the example operation may be performed by a combination of NMS 130 and at least one NAS device of the plurality of NAS devices 108A at site 102A.

Therefore, from one perspective, there have been described techniques for dynamically invoking a radio frequency (RF) spectrum capture at a site based on detection of an anomalous event at a node or radio of an access point (AP) device at the site. For example, a system is configured to detect an anomalous event at a node of an AP device based on network data obtained for the AP device; based on the anomalous event, invoke an RF spectrum capture by one or more nodes of one or more AP devices at the site; store spectrum data obtained from the RF spectrum capture in association with the anomalous event; and determine a root cause of the anomalous event based on the spectrum data associated with the anomalous event and the network data from which the anomalous event was detected.

Further examples of feature combinations taught by the present disclosure are set out in the following numbered clauses.

Clause 1. A system comprising: memory; and one or more processors in communication with the memory and configured to: detect an anomalous event at a node of an access point (AP) device based on network data obtained for the AP device, the AP device included in a plurality of AP devices at a site; based on the anomalous event, invoke a radio frequency (RF) spectrum capture by one or more nodes of one or more AP devices included in the plurality of AP devices; store spectrum data obtained from the RF spectrum capture in association with the anomalous event; and determine a root cause of the anomalous event based on the spectrum data associated with the anomalous event and the network data from which the anomalous event was detected.

Clause 2. The system of clause 1, wherein to invoke the RF spectrum capture, the one or more processors are configured to send a message to at least a node of the AP device operating as a scan radio thereby instructing the scan radio to perform the RF spectrum capture on at least a channel of the RF spectrum on which the anomalous event was detected.

Clause 3. The system of clause 1 or 2, wherein to invoke the RF spectrum capture, the one or more processors send a message to at least the node of the AP device at which the anomalous event was detected thereby instructing the node to perform the RF spectrum capture on at least an operating channel of the node.

Clause 4. The system of clause 1, 2 or 3, wherein the one or more processors are configured to select the one or more nodes of the one or more AP devices to perform the spectrum capture.

Clause 5. The system of any preceding clause, wherein the one or more processors are configured to select one or more channels or one or more frequency bands of the RF spectrum on which to perform the RF spectrum capture.

Clause 6. The system of any preceding clause, wherein the RF spectrum capture comprises a full RF spectrum capture that includes all frequency bands of the RF spectrum.

Clause 7. The system of any preceding clause, wherein to detect the anomalous event, the one or more processors are configured to one of: detect a capacity anomaly event on an operating channel of the node of the AP device due to interference from a non-WiFi source; detect an increase in communication frame errors for one or more client devices on the operating channel of the node of the AP device; or detect a scan anomaly event on at least one channel based on a sweep of the RF spectrum by the node of the AP device operating as a scan radio.

Clause 8. The system of any preceding clause, wherein the one or more processors are further configured to, based on the anomalous event and after the RF spectrum capture, change at least one of a width of an operating channel of the node of the AP device, the operating channel of the node of the AP device, or a frequency band of the node of the AP device.

Clause 9. The system of any preceding clause, wherein to store the spectrum data, the one or more processors are configured to: assign an identifier to the anomalous event; associate the spectrum data obtained from the RF spectrum capture with the identifier of the anomalous event; and store the spectrum data in a database using the identifier of the anomalous event as an index key.

Clause 10. The system of any preceding clause, wherein to determine a root cause of the anomalous event, the one or more processors are configured to: retrieve the spectrum data associated with the anomalous event from storage; correlate the spectrum data with the network data indicative of the anomalous event; and determine the root cause of the anomalous event within the site based on the spectrum data correlated with the network data of the anomalous event.

Clause 11. The system of ant preceding clause, wherein the one or more processors are configured to send a notification of the determined root cause of the anomalous event to a computing device, wherein the notification includes at least one recommendation to avoid or remediate the determined root cause.

Clause 12. The system of any preceding clause, wherein the system comprises one of a local controller or a cloud-based network management system that manages the plurality of AP devices at the site.

Clause 13. The system of any preceding clause, wherein the one or more processors are configured to: select at least one node of at least one AP device of the plurality of AP devices to operate as a simulator node to send synthetic access requests of a simulated client device to at least one node of at least one AP device of the plurality of AP devices; and invoke continuous monitoring by the one or more nodes of the one or more AP devices.

Clause 14. The system of any preceding clause, wherein the system comprises at least one AP device of the plurality of AP devices at the site or at least one network device of a plurality of network devices at the site that are connected to the plurality of AP devices.

Clause 15. A method comprising: detecting an anomalous event at a node of an access point (AP) device based on network data obtained for the AP device, the AP device included in a plurality of AP devices at a site; based on the anomalous event, invoking a radio frequency (RF) spectrum capture by one or more nodes of one or more AP devices included in the plurality of AP devices; storing spectrum data obtained from the RF spectrum capture in association with the anomalous event; and determining a root cause of the anomalous event based on the spectrum data associated with the anomalous event and the network data from which the anomalous event was detected.

Clause 16. The method of clause 15, wherein invoking the RF spectrum capture comprises sending a message to at least a node of the AP device operating as a scan radio thereby instructing the scan radio to perform the RF spectrum capture on at least a channel of the RF spectrum on which the anomalous event was detected.

Clause 17. The method of clause 15 or 16, wherein invoking the RF spectrum capture comprises sending a message to at least the node of the AP device at which the anomalous event was detected thereby instructing the node to perform the RF spectrum capture on at least an operating channel of the node.

Clause 18. The method of clause 15, 16 or 17, further comprising, based on the anomalous event and after the RF spectrum capture, changing at least one of a width of an operating channel of the node of the AP device, the operating channel of the node of the AP device, or a frequency band of the node of the AP device.

Clause 19. The method of any of clauses 15 to 18, wherein storing the spectrum data comprises: assigning an identifier to the anomalous event; associating the spectrum data obtained from the RF spectrum capture with the identifier of the anomalous event; and storing the spectrum data in a database using the identifier of the anomalous event as an index key.

Clause 20. The method of any of clauses 15 to 19, wherein determining the root cause of the anomalous event comprises: retrieving the spectrum data associated with the anomalous event from storage; correlating the spectrum data with the network data indicative of the anomalous event; and determining the root cause of the anomalous event within the site based on the spectrum data correlated with the network data of the anomalous event.

Clause 21. Computer readable media comprising instructions that, when executed, cause one or more processors to: detect an anomalous event at a node of an access point (AP) device based on network data obtained for the AP device, the AP device included in a plurality of AP devices at a site; based on the anomalous event, invoke a radio frequency (RF) spectrum capture by one or more nodes of one or more AP devices included in the plurality of AP devices; store spectrum data obtained from the RF spectrum capture in association with the anomalous event; and determine a root cause of the anomalous event based on the spectrum data associated with the anomalous event and the network data from which the anomalous event was detected.

Clause 22. A method comprising steps as performed by the system of any of clauses 1-14.

Clause 23. Computer readable media comprising instructions that, when executed, cause one or more processors to operate as the system of any of clauses 1-14.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. For example, the computer-readable medium may be a computer-readable data storage medium that may store such instructions for execution by a processor. In further examples, the computer-readable medium may be a computer-readable transmission medium that may convey such instructions for execution by a processor

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

## Claims

1. A system comprising:
memory; and
one or more processors in communication with the memory and configured to:
detect an anomalous event at a node of an access point, AP, device based on network data obtained for the AP device, the AP device included in a plurality of AP devices at a site;
based on the anomalous event, invoke a radio frequency, RF, spectrum capture by one or more nodes of one or more AP devices included in the plurality of AP devices;
store spectrum data obtained from the RF spectrum capture in association with the anomalous event; and
determine a root cause of the anomalous event based on the spectrum data associated with the anomalous event and the network data from which the anomalous event was detected.

2. The system of claim 1, wherein to invoke the RF spectrum capture, the one or more processors are configured to send a message to at least a node of the AP device operating as a scan radio thereby instructing the scan radio to perform the RF spectrum capture on at least a channel of the RF spectrum on which the anomalous event was detected.

3. The system of any of claims 1-2, wherein to invoke the RF spectrum capture, the one or more processors send a message to at least the node of the AP device at which the anomalous event was detected thereby instructing the node to perform the RF spectrum capture on at least an operating channel of the node.

4. The system of any of claims 1-3, wherein the one or more processors are configured to select the one or more nodes of the one or more AP devices to perform the spectrum capture.

5. The system of any of claims 1-4, wherein the one or more processors are configured to select one or more channels or one or more frequency bands of the RF spectrum on which to perform the RF spectrum capture.

6. The system of any of claims 1-5, wherein the RF spectrum capture comprises a full RF spectrum capture that includes all frequency bands of the RF spectrum.

7. The system of any of claims 1-6, wherein to detect the anomalous event, the one or more processors are configured to one of:
detect a capacity anomaly event on an operating channel of the node of the AP device due to interference from a non-WiFi source;
detect an increase in communication frame errors for one or more client devices on the operating channel of the node of the AP device; or
detect a scan anomaly event on at least one channel based on a sweep of the RF spectrum by the node of the AP device operating as a scan radio.

8. The system of any of claims 1-7, wherein the one or more processors are further configured to, based on the anomalous event and after the RF spectrum capture, change at least one of a width of an operating channel of the node of the AP device, the operating channel of the node of the AP device, or a frequency band of the node of the AP device.

9. The system of any of claims 1-8, wherein to store the spectrum data, the one or more processors are configured to:
assign an identifier to the anomalous event;
associate the spectrum data obtained from the RF spectrum capture with the identifier of the anomalous event; and
store the spectrum data in a database using the identifier of the anomalous event as an index key.

10. The system of any of claims 1-9, wherein to determine a root cause of the anomalous event, the one or more processors are configured to:
retrieve the spectrum data associated with the anomalous event from storage;
correlate the spectrum data with the network data indicative of the anomalous event; and
determine the root cause of the anomalous event within the site based on the spectrum data correlated with the network data of the anomalous event.

11. The system of any of claims 1-10, wherein the one or more processors are configured to send a notification of the determined root cause of the anomalous event to a computing device, wherein the notification includes at least one recommendation to avoid or remediate the determined root cause.

12. The system of any of claims 1-11, wherein the one or more processors are configured to:
select at least one node of at least one AP device of the plurality of AP devices to operate as a simulator node to send synthetic access requests of a simulated client device to at least one node of at least one AP device of the plurality of AP devices; and
invoke continuous monitoring by the one or more nodes of the one or more AP devices.

13. A method comprising:
detecting an anomalous event at a node of an access point, AP, device based on network data obtained for the AP device, the AP device included in a plurality of AP devices at a site;
based on the anomalous event, invoking a radio frequency, RF, spectrum capture by one or more nodes of one or more AP devices included in the plurality of AP devices;
storing spectrum data obtained from the RF spectrum capture in association with the anomalous event; and
determining a root cause of the anomalous event based on the spectrum data associated with the anomalous event and the network data from which the anomalous event was detected.

14. The method of claim 13, further comprising steps corresponding to the functionality recited in any of claims 2-12.

15. Computer-readable media comprising instructions that, when executed by one or more programmable processors, cause the one or more programmable processors to perform the method recited by any of claims 13-14.
